(19)

**Europäisches Patentamt**
**European Patent Office**
**Office européen des brevets**

(11) **EP 4 560 303 B1**

(12) **EUROPEAN PATENT SPECIFICATION**

(45) Date of publication and mention
of the grant of the patent:
**10.12.2025 Bulletin 2025/50**

(21) Application number: **23211079.1**

(22) Date of filing: **21.11.2023**

(51) International Patent Classification (IPC):
*G01N 27/30* (2006.01)      *H01M 8/04007* (2016.01)
*H01M 8/04089* (2016.01)      *H01M 8/18* (2006.01)
*G01N 27/416* (2006.01)

(52) Cooperative Patent Classification (CPC):
**G01N 27/4167; H01M 8/188;** G01N 27/301

---

(54) **PROBE FOR IRON SALT BATTERY MANAGEMENT SYSTEM**

SONDE FÜR EISENSALZBATTERIEVERWALTUNGSSYSTEM

SONDE POUR SYSTÈME DE GESTION DE BATTERIE AU SEL DE FER

---

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.05.2025 Bulletin 2025/22**

(73) Proprietor: **VoltStorage GmbH**
**80935 München (DE)**

(72) Inventors:
• **Alper, John**
**80797 München (DE)**

• **Farber, Eliyahu**
**81369 München (DE)**

(74) Representative: **Grünecker Patent- und
Rechtsanwälte
PartG mbB
Leopoldstraße 4
80802 München (DE)**

(56) References cited:
**WO-A1-2018/201070      WO-A1-2018/201093
WO-A1-2020/106549      US-A1- 2023 144 194**

---

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The invention relates to probes for an iron salt battery and a method for operating an iron salt battery.

### Prior Art

Different redox flow batteries are known in the art. A particular type is the iron salt battery which has the advantage of being cost efficient due to using only iron in different oxidation states as the electrolyte. It comprises two tanks, which in the uncharged state store electrolytes of dissolved Fe(ll) ions. The electrolyte is pumped into the battery cell which includes two separated half-cells. The base electrolyte comprises Fe(ll) salts which are dissolved in water, where Cl⁻ ions may be used as counter ions. Fe(ll) chloride is preferred since the conductivity thereof is high.

An iron salt battery is known from WO2018/201070 A1.

Electrolyte in the positive tank is pumped through the positive half-cell, and electrolyte in the negative tank is pumped through the negative half-cell. The electrochemical reaction takes place at the electrodes within each half-cell. The half-cells are separated by a separator. This can be an anionic exchange membrane, a cationic exchange membrane or a porous separator. The single cells can be stacked and electrically connected in series via bipolar plates, forming a battery stack.

The energy storage is based on the electrochemical reaction of iron. During charge, Fe(ll) oxidizes to Fe(lll) in the positive half-cell while in the negative half-cell Fe(ll) is reduced to Fe(0). The latter reaction in the negative half-cell is also called the plating reaction, as Fe(0) is deposited on the negative electrode. During discharge, the plated Fe(0) is dissolved into the electrolyte forming Fe(II), while Fe(lll) reduces to Fe(ll) in the positive half-cell.

During the reaction, the charge within the electrolyte is balanced by migration of charged species through the separator. A crossover of Fe(lll) from the positive to the negative half-cell may lead to coulombic efficiency loss, since it will react with the Fe(0) on the negative side.

During charge, hydrogen will evolve due to the hydrogen evolution reaction (HER). The acidic protons $H^+$ in solution react to form hydrogen gas (Reaction 2) whilst iron(II) oxidises in the positive half-cell (Reaction 1).

Positive half-cell:

$$Fe^{2+}(aq) \rightarrow Fe^{3+}(aq) + e^- \qquad (1)$$

HER at negative half-cell:

$$H^+ + e- \rightarrow \frac{1}{2}\,H_2(g) \qquad (2)$$

The HER is pH dependent. At lower pH values, the concentration of $H^+$ is high, which increases the kinetics of the side reaction. Over time, the pH increases on the negative side. At a pH $\geq$ ~4, insoluble iron hydroxide forms and deposits onto the separator. This leads to increased resistance of ionic transfer, reduced coulombic and voltaic efficiency and ultimately cell failure.

Further, during normal operation of the battery, some metallic (solid) iron, Fe(0) formed during the charging process can get dislodged from the electrode in the negative half-cell, and clog or constrict the internal flow channels within the cell or stack of cells. Residual iron may also be a result of uneven plating throughout the stack of cells as a result of shunt currents (e.g., parasitic currents through electrolyte channels).

The "health" of the battery is defined based on performance parameters, such as Coulombic efficiency (CE), voltaic efficiency (VE), energy efficiency (EE), and pressure drop across the stack being within a pre-configured bracket. CE describes the charge efficiency by which electrons are transferred in batteries. CE is the ratio of the total charge extracted from the battery to the total charge put into the battery over a full cycle. VE is another way to measure battery efficiency, which represents the ratio of the average discharge voltage to the average charge voltage. EE is a measure for the amount of energy that can be taken from the battery compared to the amount of energy that was charged into the battery beforehand.

However, in order to determine such performance parameters and initialize corresponding operations to return the ISB device to a healthy state. Specifically, a knowledge of the pH value and/or the Fe(lll) concentration in various electrolytes of the ISB device is required when the iron salt battery is to be returned to optimal performance regarding coulombic and voltaic efficiency.

Iron chloride can be detrimental to commercial pH probes, which use Ag/AgCl electrodes as a reference. A typical failure mode of pH probes is clogging of the Ag/AgCl reference electrode junction with silver chloride precipitates. A crossover of ionic species of iron through the electrode junction may clog the electrode junction in a similar way, due to the fact that iron species precipitate at pH=7, the typical pH in an Ag/AgCl reference electrode. In the same way that pH Ag/AgCl references can be clogged by the iron chloride solution of an ISB, so can typical oxidation-reduction potential (ORP) indicators that use Ag/AgCl references.

**Description of the Invention**

It is the object of the present invention to overcome or alleviate at least some of the above mentioned disadvantages.

This object is achieved by independent claim 1.

Claim 1 provides a pH-probe for determining a pH value of an electrolyte of an iron salt battery, ISB, device, the pH-probe comprising: a Fe(II)/Fe(III) reference electrode comprising a reference chamber containing a solution with predefined concentrations of Fe(II) and Fe(III); and a pH glass electrode; wherein the pH-probe is configured to measure a potential between the pH glass electrode and the Fe(II)/Fe(III) reference electrode, when the reference chamber and the pH glass electrode are immersed in the electrolyte of the ISB device. Using the reference to the Fe(II)/Fe(III) reference electrode avoids the disadvantage of iron chloride being detrimental to prior art pH probes which use Ag/AgCl electrodes as a reference.

The above-mentioned object is further achieved by independent claim 2.

Claim 2 provides a Fe(III)-probe for determining a Fe(III) concentration of an electrolyte of an iron salt battery, ISB, device, the Fe(III)-probe comprising: a Fe(II)/Fe(III) reference electrode comprising a reference chamber containing a solution with predefined concentrations of Fe(II) and Fe(III); and a graphite electrode; wherein the Fe(III)-probe is configured to measure a potential between the graphite electrode and the Fe(II)/Fe(III) reference electrode, when the reference chamber and the graphite electrode are immersed in the electrolyte of the ISB device. This probe is useful for determining the Fe(III) concentration of an electrolyte.

The invention further provides an iron salt battery, ISB, device, the ISB device comprising: an ISB cell or a stack of ISB cells, wherein each ISB cell comprises a positive and a negative ISB half-cell; a positive tank containing positive electrolyte; a negative tank containing negative electrolyte; an acidification tank, AT, containing acidic electrolyte; and an acidification cell, AC, comprising a positive and a negative AC half-cell, the AC being configured for lowering pH of the acidic electrolyte; wherein the ISB device further comprises at least one pH-probe according to claim 1 immersed in electrolyte of the ISB device and/or at least one Fe(III)-probe according to claim 2 immersed in electrolyte of the ISB device; and processing circuitry configured to determine a pH-value from a signal of the at least one pH-probe and/or configured to determine a Fe(III) concentration value from a signal of the at least one Fe(III)-probe. Depending on the point in the operation method, the acidic electrolyte in the acidification tank may comprise iron dichloride or a mixture of iron dichloride and iron trichloride.

The invention further provides a method of operating the ISB device, the method comprising: selectively providing fluidic connections between the tanks and/or cells by adjusting valves and pumps in a piping of the ISB device using the processing circuitry to perform one or more operational modes of the ISB device.

In a development, the method of operating the ISB device may comprise: adjusting the valves and pumps in the piping to perform one of the following operations: charging the ISB device by flowing positive electrolyte from the positive tank to and through the positive half-cell(s) and then back to the positive tank, and flowing negative electrolyte from the negative tank to an through the negative half-cell(s) of the ISB cell or stack of ISB cells and then back to the negative tank, wherein electric power is provided to electrodes of the ISB cell or stack of ISB cells; or discharging the ISB device by flowing positive electrolyte from the positive tank to and through the positive half-cell(s) and then back to the positive tank, and flowing negative electrolyte from the negative tank to an through the negative half-cell(s) of the ISB cell or stack of ISB cells and then back to the negative tank, wherein electric power is demanded from electrodes of the ISB cell or stack of ISB cells.

In another development, the method of operating the ISB device may comprise: determining, in particular continuously tracking, a pH value in the negative electrolyte using the at least one pH-probe; and if the pH value is determined to be above a predefined pH threshold value, performing an acidification protocol to acidify the negative electrolyte using the acidic electrolyte, either intermittently within a charging cycle or when the charging cycle is complete or continuously while charging, thereby reducing the pH value to be within a target pH range.

The acidification protocol may comprise: adjusting the valves and pumps in the piping such that acidic electrolyte flows from the AT, circumvents the AC, and is directed to the negative tank, while the flow of positive and negative electrolyte though the ISB cell or stack of cells is stopped; or adjusting the valves and pumps in the piping such that acidic electrolyte flows from the AT, circumvents the AC, and is directed to the negative tank, while the flow of positive and negative electrolyte though the ISB cell or stack of cells continues, wherein the flow rate of the acidic electrolyte is preferably set to balance out the pH increase in the negative electrolyte due to a hydrogen evolution reaction, HER.

In a further development, the method of operating the ISB device may comprise: performing an iron hydroxide removal protocol triggered by at least one of the following conditions: (i) a predefined number of charging and discharging cycles has been performed, (ii) a voltaic efficiency, VE, has dropped below a VE threshold, and (iii) a pressure drop on the outlet from one of the ISB cells is below a predefined value; wherein the iron hydroxide removal protocol comprises adjusting the valves and pumps in the piping such that acidic electrolyte flows from the AT to and through the positive half-cell(s) of the ISB cell or stack of ISB cells, then to and through the negative half-cell(s) of the ISB cell or stack of ISB cells, then to and through the positive half-cell of the AC, and then back to the AT.

According to another development, the method of operating the ISB device may comprise: performing an iron residue removal protocol triggered by at least one of the following conditions: (i) after a predefined number of charging and discharging cycles has been performed and (ii) a pressure drop across the ISB cell or stack of ISB cells is outside a predefined pressure drop range, in particular at least one of a pressure drop across the positive half-cell(s) and the negative half-cell(s) of the ISB cell or stack of ISB cells; wherein the iron residue removal protocol comprises adjusting the valves and pumps in the piping such that positive electrolyte flows from the positive tank to and through the positive half-cell(s) of the ISB cell or stack of ISB cells, then to and through the negative half-cell(s) of the ISB cell or stack of ISB cells, and then back to the positive tank; wherein the iron residue removal protocol is preferably started after the end of a discharge cycle.

In alternative developments, the iron residue removal protocol may comprise adjusting the valves and pumps in the piping such that acidic electrolyte flows from the AC to and through the negative half cell(s) of the ISB cell or stack of ISB cells and back to the AC; or the iron residue removal protocol may comprise adjusting the valves and pumps in the piping such that acidic electrolyte flows from the AC to and through the positive half-cell(s) of the ISB cell or stack of ISB cells, then to and through the negative half-cell(s) of the ISB cell or stack of ISB cells, and then back to the AT.

According to a further development, the method of operating the ISB device may comprise: transferring excess volume of negative electrolyte from the negative tank to the acidification tank to return to a set-point volume of negative electrolyte in the negative tank.

In another development, the method of operating the ISB device may comprise: performing a partial capacity restoring protocol comprising adjusting the valves and pumps in the piping such that a volume of positive electrolyte is transferred from the positive tank to the AT, while the ISB device in the charged state; wherein the required volume to be transferred is determined from at least one of (i) a concentration of Fe(III) in the positive electrolyte, as determined by the Fe(III)-probe and (ii) a coulombic efficiency, CE, of previous charging/discharging cycles.

The partial capacity restoring protocol may further comprising the step of: adjusting the valves and pumps in the piping such that acidic electrolyte flows from the AT to the positive half-cell of the AC and then back to the AT, thereby reducing Fe(III) to Fe(II) using the AC, in particular while the ISB device is charging or discharging.

In a further development, the method of operating the ISB device may comprise: determining an end point of the partial capacity restoring protocol by reaching threshold values of current or voltage on the AC or by reaching a Fe(III) threshold value detected by an Fe(III)-probe immersed in the acidic electrolyte; and returning excess volume from the acidification tank to the positive tank by adjusting the valves and pumps such that acidic electrolyte flows only from the acidification tank to the positive tank.

According to another development, the method of operating the ISB device may comprise: performing a full capacity restoring protocol in a discharged state of the ISB device; the full capacity restoring protocol comprising adjusting the valves and pumps in the piping such that positive electrolyte flows from the positive tank to and through the positive ISB half-cell(s), then to and through the negative ISB half-cell(s), then to and through the positive half-cell of the AC, and then back to the positive tank, in particular to reduce essentially all Fe(III) in the ISB device.

This may further comprise: determining an end point of the full capacity restoring protocol by reaching threshold values of current or voltage on the AC, or by reaching a Fe(III) threshold value detected by the Fe(III)-probe.

Further features and exemplary embodiments as well as advantages of the present invention will be explained in greater detail hereinafter with reference to the drawings. It is understood that the specific embodiments do not limit the present invention.

Brief Description of the Drawings

Fig. 1  shows the pH probe according to the invention.
Fig. 2  shows a Fe(III)-probe according to the invention.
Fig. 3  shows a general diagram of an embodiment of the ISB device according to the invention.
Fig. 4  shows a normal operation of charging or discharging of the ISB device according to Fig. 3.
Fig. 5  shows the acidic electrolyte flow while the "removal of iron hydroxide protocol" is being executed.
Fig. 6  shows the flow of positive electrolyte during the "removal of iron residue protocol".
Fig. 7  shows acidifying the negative electrolyte.

Fig. 8 shows regular ISB device operation combined with continuous acidification.

Fig. 9 shows transferring excess volume from the negative tank to the acidification tank.

Fig. 10 shows a scheme to transfer liquid from positive to acidification tank in a "partial capacity restoring protocol".

Fig. 11 shows ISB device discharge while partial capacity restoring is taking place.

Fig. 12 shows rebalancing the positive tank after partial capacity restore.

Fig. 13 shows full capacity restoration.

**Embodiments**

The invention is described in detail for the following embodiments with respect to the accompanying drawings.

Overview of the invention

- The invention includes an algorithm to maintain iron salt battery (ISB) health, and all the components required to execute said algorithm.

  - The "health" of the battery is defined based on performance parameters, such as coulombic efficiency (CE), voltaic efficiency (VE), energy efficiency (EE), and pressure drop across the stack within a pre-configured bracket. In a healthy battery, the performance indicators are above a threshold, and the pressure drop within a bracket. Performance below the threshold, or pressure outside the bracket, indicate a required intervention, which will be described herein.

- The invention includes the addition of a third tank, with acidic electrolyte (AT - acidification tank), connected to the ISB cell and to the tanks with a system of tubes and valves.

- The invention includes innovative probes developed specifically for an ISB, such as the ISB-stable pH probe and the Nernstian Fe(III) probe.

- The invention includes tracking parameters such as pH and/or concentration of Fe(III). Further, temperature, pressure, tank volume, CE, VE and other parameters may be tracked.

  - To track the pH, a novel ISB-stable pH probe which was developed for this purpose is used. It is composed of a pH-half cell electrode, combined with Fe(II)/Fe(III) reference. The pH is tracked in the negative electrolyte, but can also be tracked in the positive or the acidification tank.

  - To track Fe(III)%, a novel Nernstian Fe(III) probe which was developed for this purpose is used. Fe(III)% is tracked in the positive electrolyte and optionally in the acidification tank.

  - Auxiliary parameters such as pressure, temperature and tank volume may be monitored using industrially available devices.

  - Coulombic, voltaic and energy efficiency are monitored by the software controlling the power and load.

- The invention includes the set points that are required for healthy battery cycling, identifying deviations, and affecting the appropriate interventions. This includes rules and steps to return the battery to desired set points.

  - Possible interventions are iron residue removal protocol, iron hydroxide removal protocol, acidification protocol, capacity restoring (partial and full), and volume replenishment.

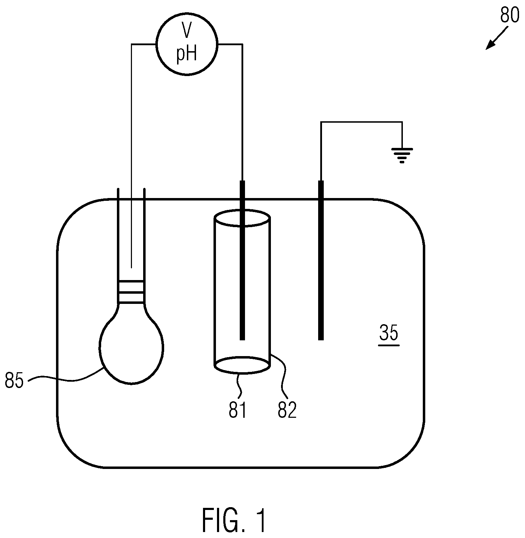

Fig. 1 shows the pH probe according to the invention.

The pH probe 80 is configured for determining a pH value of an electrolyte 35 of an iron salt battery, ISB, device. The pH-probe 80 comprises a Fe(II)/Fe(III) reference electrode 81 that has a reference chamber 82 containing a solution with predefined concentrations of Fe(II) and Fe(III). The pH probe 80 further has a pH glass electrode 85. The pH glass electrode 85 is of a conventional design and includes a pH sensitive glass membrane with a buffer solution on the inside.

However, the pH probe 80 is configured specifically for use in an ISB and is stable in ISB electrolytes. The pH glass electrode 85 is coupled with a reference solution of stable $FeCl_2/FeCl_3$ reference solution of known concentrations, which is connected to the electrolyte via an ionic junction (frit, leakless frit, or other ionic conductive material) of the reference chamber 82.

The pH-probe 80 is configured to measure a potential between the pH glass electrode 85 and the Fe(II)/Fe(III) reference electrode 81, when the reference chamber 82 and the pH glass electrode 85 are immersed in the electrolyte 35 of the ISB device. The electrolyte 35 may be grounded as indicated in Fig. 1. The potential V(pH) may be recorded with the assistance of differential operation amplifiers or other electronic circuitry.

The pH probe 80 may be used in the following modes / protocols of operation (described below) of an ISB device:

| Stage | Probe location | Probe role |
|---|---|---|
| Charging/discharging | Negative tank or negative electrolyte tubing | Monitor that pH doesn't pass a critical level. Trigger acidification intervention |
| Acidification | Negative tank | Determine when the protocol is complete. |
| Acidification | Acidification tank | Ensure that the electrolyte is acidic enough to bring the pH in the negative tank below a pH setpoint. |
| Removal of iron hydroxide protocol | Acidification tank | Ensure that the electrolyte is acidic enough to dissolve the iron hydroxide species. |

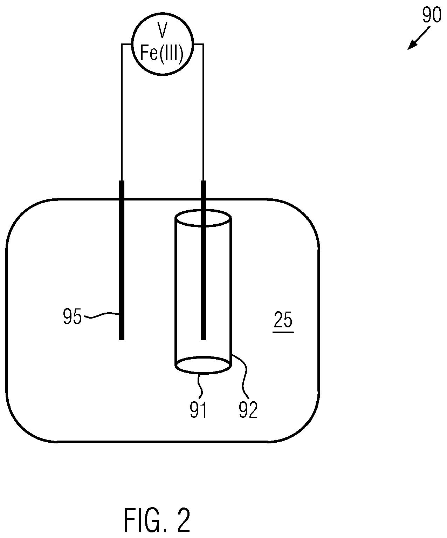

Fig. 2 shows a Fe(III)-probe according to the invention.

The Fe(III)-probe 90 is configured for determining a Fe(III) concentration of an electrolyte 25 of an iron salt battery, ISB, device. The Fe(III)-probe 90 comprises a Fe(II)/Fe(III) reference electrode 91 comprising a reference chamber 92 containing a solution with predefined concentrations of Fe(II) and Fe(III) and a graphite electrode 95. The Fe(III)-probe 90 is configured to measure a potential between the graphite electrode 95 and the Fe(II)/Fe(III) reference electrode 91, when the reference chamber 92 and the graphite electrode 95 are immersed in the electrolyte 25 of the ISB device. This probe is used for determining the Fe(III) concentration of the electrolyte 25.

More specifically, the reference chamber 92 contains a reference solution of stable $FeCl_2/FeCl_3$ reference solution of known concentrations, which is connected to the electrolyte 25 via an ionic junction (frit, leakless frit, or other ionic conductive material) of the reference chamber 92. This is similar to the reference electrode for the pH probe 80 described with reference to Fig. 1.

The Fe(III) probe 90 works on the principle of converting a Nernstian potential to concentration. The probe 90 is designed for stable continuous operation in the high ironchloride environment of an iron salt battery. It achieves this stability by combining a material that allows ion transfer, with an interior solution that maintains its potential and composition as long as it is used in iron chloride electrolyte.

The graphite electrode 95 senses the potential V(Fe(III)) in the electrolyte solution 25, and that potential is measured versus the reference electrode 91 with known concentrations of Fe(II) and Fe(III). The potential behaves in accordance to the Nernst equation, and so the concentration of Fe(III) can be determined. This information can be used, for example, to determine the state-of-charge (SOC) of the ISB (SOC is the level of charge of the ISB relative to its capacity), to determine for how long the AC needs to run, or how much electrolyte needs to be transferred from the positive electrolyte tank to the AT.

The equation to find the %Fe(III) from the voltage between the two electrodes:

$$\%Fe(III) = \left( 1 + \exp\left( -\frac{EF}{RT} \right) \right)^{-1}$$

where E is the signal (voltage) from the Fe(III) probe 90, F is Faraday's constant, R is the gas constant, and T is the temperature (in Kelvin units).

The Fe(III) probe may be used in the following modes / protocols of operation (described below) of an ISB device:

| Stage | Probe location | Probe role |
|---|---|---|
| Charge/discharge | positive tank or positive tubing | Ensure that the reactions are producing Fe(III) in the positive tank. Give positive state of charge. |

(continued)

| Stage | Probe location | Probe role |
|---|---|---|
| Partial capacity restoration | positive tank Acidification tank | Calculate the volume required to transfer to the acidification tank. Predict the duration of capacity restoring. Indicate end point of capacity restoring. |
| Full capacity restoration | positive tank | Determine the endpoint of the capacity restoration. Predict the duration of capacity restoring. |
| Removal of iron residue protocol | positive tank or positive tubing, Acidification tank | Determine the endpoint of the protocol. |

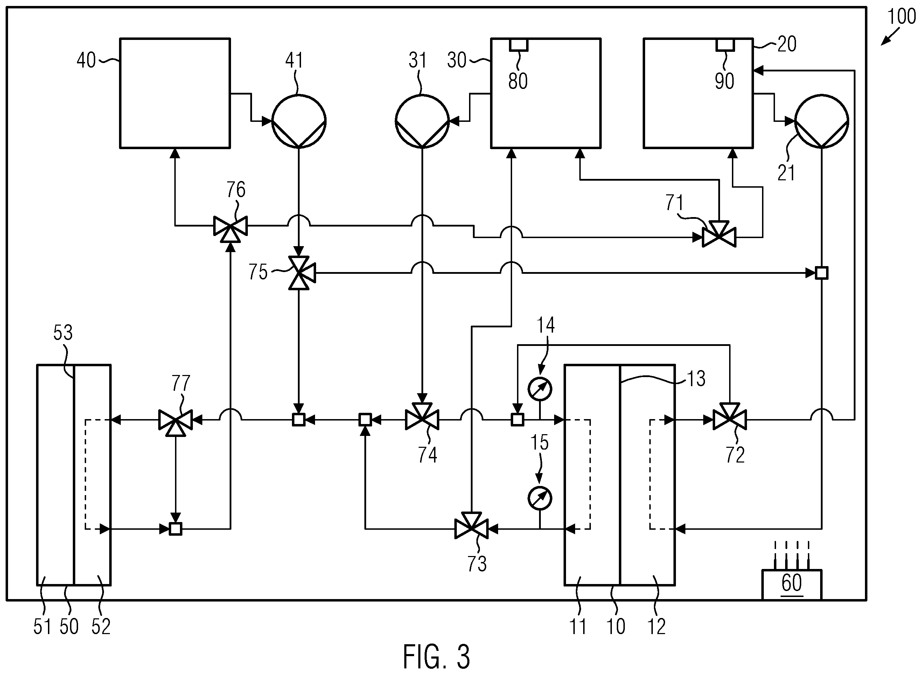

Fig. 3 shows a general diagram of an embodiment of the ISB device according to the invention.

The iron salt battery, ISB, device 100 comprises an ISB cell or a stack of ISB cells 10, wherein each ISB cell comprises a positive 12 and a negative ISB half-cell 11; a positive tank 20 containing positive electrolyte; a negative tank 30 containing negative electrolyte; an acidification tank 40, AT, containing acidic electrolyte, in particular acidic iron dichloride electrolyte; and an acidification cell 50, AC, comprising a positive 52 and a negative AC half-cell 51, the AC 50 being configured for lowering pH of the acidic electrolyte. The ISB device 100 further comprises at least one pH-probe 80 as described with reference to Fig. 1 that is immersed in electrolyte (in this embodiment in the negative electrolyte in the negative tank 30) of the ISB device 100 and/or at least one Fe(III)-probe 90 as described with reference to Fig. 2 that is immersed in electrolyte (in this embodiment in the positive electrolyte in the positive tank 20) of the ISB device 100. The ISB device 100 further includes processing circuitry 60 configured to determine a pH-value from a signal of the at least one pH-probe 80 and/or configured to determine a Fe(III) concentration value from a signal of the at least one Fe(III)-probe 90.

The positive 12 and a negative ISB half-cells 11 are separated by a membrane/separator 13. Similarly, the positive 52 and negative AC half-cells 51 of the AC 50 are separated by an ion permeable membrane 53.

The AC 50 can be used to transfer protons from the negative AC half-cell 51 to acidic electrolyte solution passing through the positive AC half-cell 52. Thus, the pH of the acidic electrolyte solution in AT 40 can be lowered. This low pH electrolyte solution in AT 40 can then, for example, be used to rebalance the state of charge in the positive and negative electrolyte tanks 20, 30.

In order to direct the fluid flows, conduits (piping) with pumps 21, 31, 41 and valves 71-77 are provided, which can be operated by the processing circuitry 60 as required.

Further, the processing circuitry may monitor a pressure drop across the ISB cell 10 or stack of ISB cells 10, in this example between the entrance side and the exit side of the negative half-cell 11 using pressure measuring devices 14, 15.

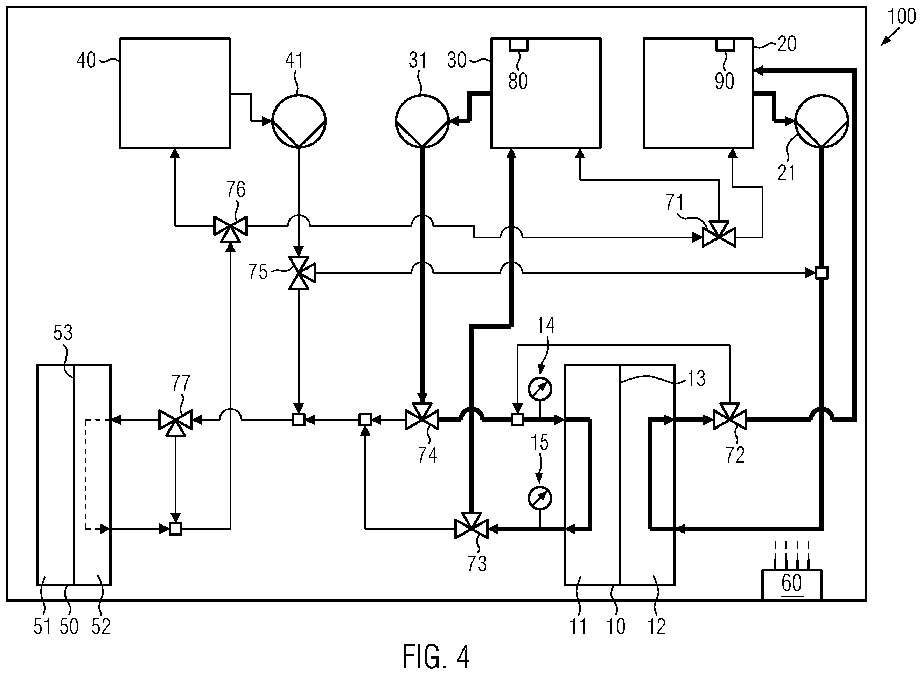

Fig. 4 shows a normal operation of charging or discharging of the ISB device 100 according to Fig. 3.

In this embodiment, the method of operating the ISB device 100 comprises: adjusting the valves 71-77 and pumps 21, 31, 41 in the piping to perform one of the following operations: charging the ISB device by flowing positive electrolyte from the positive tank 20 to and through the positive half-cell(s) 12 and then back to the positive tank 20, and flowing negative electrolyte from the negative tank 30 to an through the negative half-cell(s) 11 of the ISB cell 10 or stack of ISB cells 10 and then back to the negative tank 30, wherein electric power is provided to electrodes of the ISB cell 10 or stack of ISB cells; or discharging the ISB device 100 by flowing positive electrolyte from the positive tank 90 to and through the positive half-cell(s) 12 and then back to the positive tank 20, and flowing negative electrolyte from the negative tank 30 to an through the negative half-cell(s) 11 of the ISB cell 10 or stack of ISB cells and then back to the negative tank 30, wherein electric power is demanded from electrodes of the ISB cell 10 or stack of ISB cells. In the set-up detailed in Fig. 4, the ISB device 100 can charge or discharge, while the AC 50 is idle.

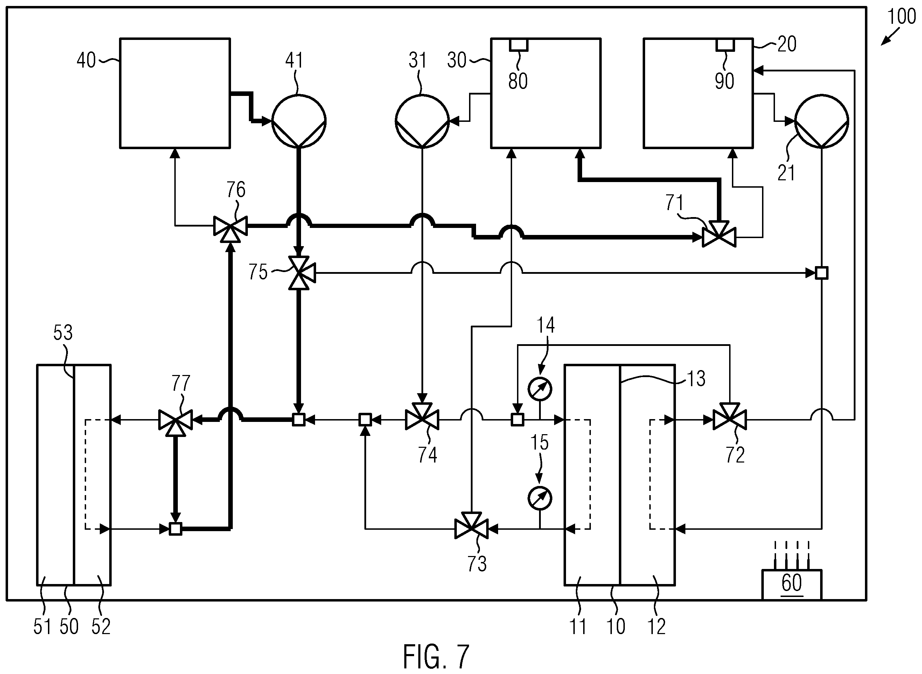

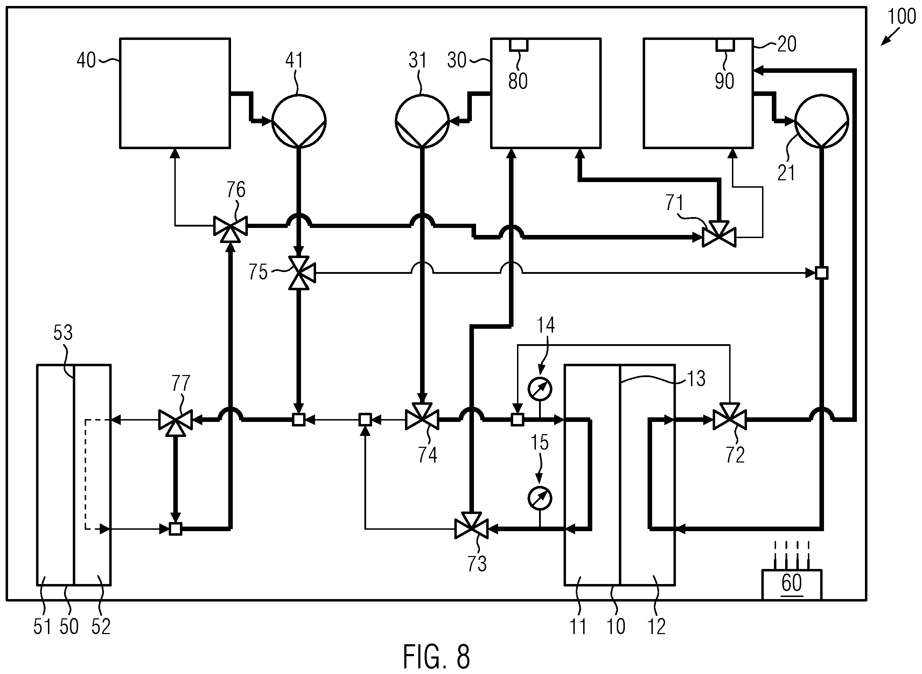

During charging, the pH in the negative tank 30, and/or in tubes containing negative electrolyte is tracked continuously. An increase of the pH above a certain setpoint may trigger an acidification protocol, either when the charging cycle is complete (see Fig. 7 and description of Fig. 7 below) or continuously while charging (see Fig. 8 and description of Fig. 8 below).

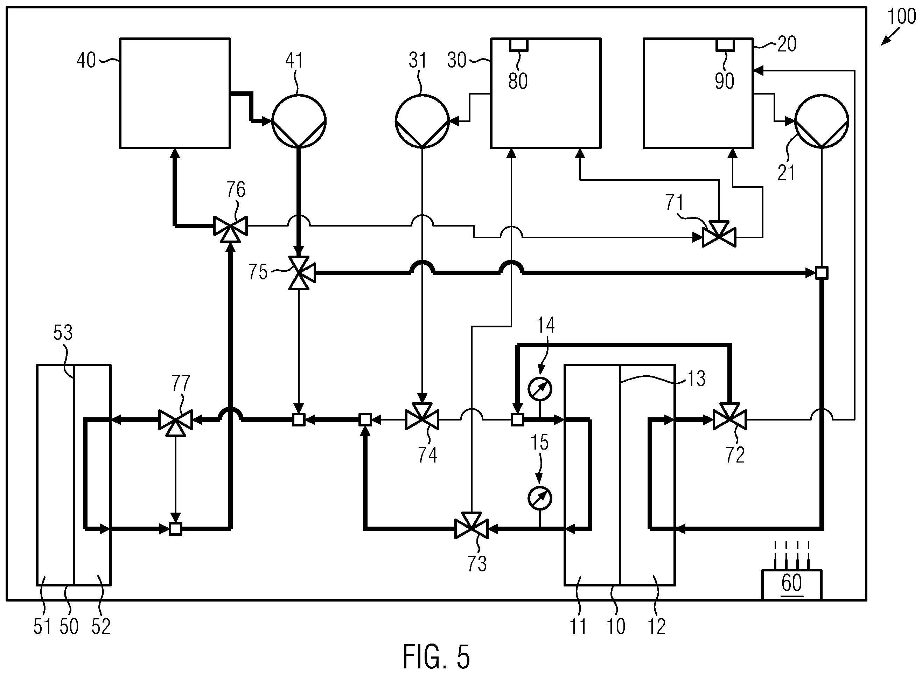

Fig. 5 shows the acid electrolyte flow while the "removal of iron hydroxide protocol" is being executed.

The method of operating the ISB device 100 to perform an iron hydroxide removal protocol may be triggered by at least one of the following conditions: (i) a predefined number of charging and discharging cycles has been performed, (ii) a voltaic efficiency, VE, has dropped below a VE threshold, and (iii) a pressure drop on the outlet from one of the ISB cells 10 is below a predefined value; wherein the iron hydroxide removal protocol comprises adjusting the valves 71-77 and pumps 21, 31, 41 in the piping such that acidic electrolyte flows from the AT 40 to and through the positive half-cell(s) 12 of the ISB cell or stack of ISB cells 10, then to and through the negative half-cell(s) 11 of the ISB cell or stack of ISB cells 10, then to and through the positive half-cell 52 of the AC 50, and then back to the AT 40. There is no flow in the other tubes of the piping.

While the ISB device 100 is charging, a pH gradient may develop between the positive and negative electrolytes. This gradient can cause iron hydroxide species to form within the ISB device 100, eventually leading to a degradation in performance. To overcome this degradation, the "removal of iron hydroxide protocol" is enacted. In this protocol, both sides 11, 12 of the ISB cell 10 are cleaned with acid electrolyte from the AT 40.

During the iron hydroxide removal protocol, the acidification tank is in a state where it contains only minimum levels of iron trichloride, in particular below 1% of the maximum value.

It is also possible to pump the acid electrolyte through both sides of the ISB in parallel, by arranging the hydraulic lines in a different configuration (not currently shown). During the iron hydroxide removal, the AC 50 can be operational, oxidizing hydrogen and reducing newly dissolved Fe(III). It is possible to set the end-point of the removal process as the time when the AC 50 drops below a certain current, voltage, after a fixed time, or a combination thereof. Operating the AC 50 while the hydroxide removal is ongoing reintroduces some of the protons lost to the hydrogen evolution side reaction (HER) that occurs during the charging process. To this end, hydrogen is supplied to the negative side of the AC 50 from hydrogen generated in the negative ISB half cell, or may come from an alternate hydrogen source, for example but not limited to, a hydrogen generator. The iron hydroxide removal protocol can be triggered after a set number of cycles, as a result of voltaic efficiency dropping below a setpoint, as a result of pressure drop on the outlet from one of the cells 10, or due to other considerations.

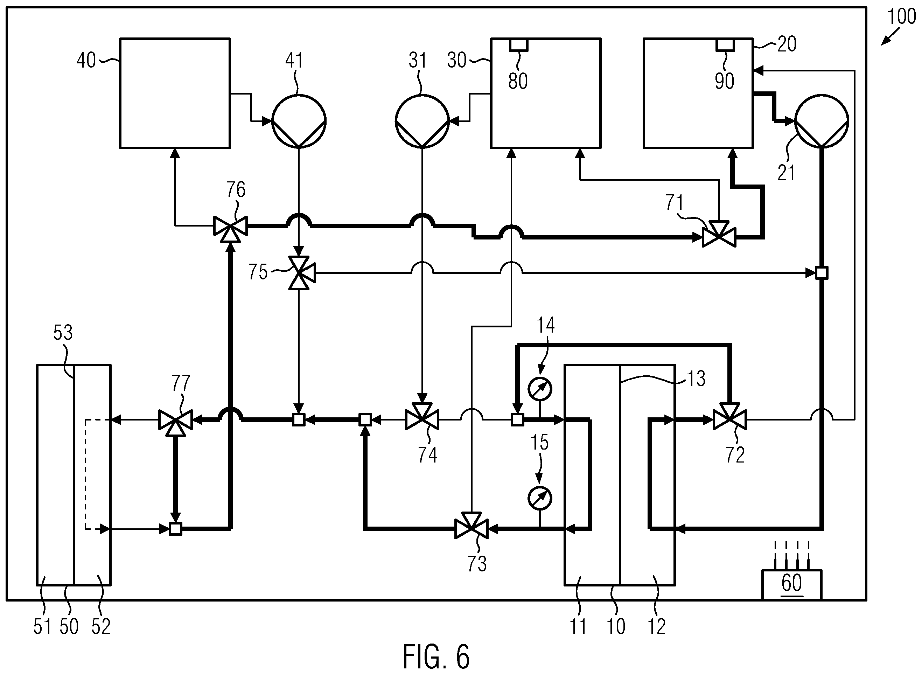

Fig. 6 shows the flow of positive electrolyte during the "removal of iron residue protocol".

This method of operating the ISB device 100 comprises performing an iron residue removal protocol triggered by at least one of the following conditions: (i) after a predefined number of charging and discharging cycles has been performed and (ii) a pressure drop across the ISB cell 10 or stack of ISB cells 10 is outside a predefined pressure drop range, in particular at least one of a pressure drop across the positive half-cell(s) 12 and the negative half-cell(s) 11 of the ISB cell 10 or stack of ISB cells 10 or (iii) a reduced columbic efficiency compared to previous cycles. The iron residue removal protocol comprises adjusting the valves 71-77 and pumps 21, 31, 41 in the piping such that positive electrolyte flows from the positive tank 20 to and through the positive half-cell(s) 12 of the ISB cell 10 or stack of ISB cells 10, then to and through the negative half-cell(s) 11 of the ISB cell 10 or stack of ISB cells 10, and then back to the positive tank 20. The iron residue removal protocol is preferably started after the end of a discharge cycle.

During normal operation of the ISB device 100, some metallic iron formed during the charging process can get dislodged from the electrode, and clog or constrict the internal flow channels within the cell or stack 10. In order to prevent such a blockage, the "removal of iron residue protocol" is enacted. The protocol may use positive electrolyte, which contains Fe(III) despite being discharged. This is a constant in the system and a result of having less than 100% coulombic efficiency for every side reaction on the negative side, and Fe(III) ion is accumulated in the positive electrolyte. The discharged positive electrolyte is allowed to flow through both sides 11, 12 of the stack 10, etching and dissolving residual metallic iron.

In an alternative (not shown in the figures), the iron residue removal protocol comprises adjusting valves the and pumps 21, 31, 41 in the piping such that acidic electrolyte flows from the AC 40 to and through the negative half cell(s) 11 of the ISB cell 10 or stack of ISB cells 10 and back to the AC 40; or to and through the positive half-cell(s) 12 of the ISB cell 10 or stack of ISB cells 10, then to and through the negative half-cell(s) 11 of the ISB cell 10 or stack of ISB cells 10, and then back to the AT 40.

Possible reactions that remove metallic iron from the flow channels within the stack are:

$$Fe^{3+} + Fe^{0} \rightarrow 2Fe^{2+}$$

$$2H^{+} + Fe^{0} \rightarrow Fe^{2+} + H_{2}$$

Accordingly, iron residue can be removed by positive electrolyte from the positive tank 20, acidic electrolyte from the AT 40, or positive electrolyte previously transferred to the AT 40.

The protocol takes preferably place only on a discharged battery, as the removal of iron metal in a charged state would mean the loss of the stored energy.

Fig. 7 shows acidifying the negative electrolyte.

This method of operating the ISB device 100 comprises determining, in particular continuously tracking, a pH value in the negative electrolyte using the at least one pH-probe 80; and if the pH value is determined to be above a predefined pH threshold value, performing an acidification protocol to acidify the negative electrolyte using the acidic electrolyte, either intermittently within a charging cycle or when the charging cycle is complete or continuously while charging, thereby reducing the pH value to be within a target pH range.

In this embodiment, the acidification protocol comprises adjusting the valves 71-77 and pumps 21, 31, 41 in the piping such that acidic electrolyte flows from the AT 40, circumvents the AC 50, and is directed to the negative tank 30, while the flow of positive and negative electrolyte though the ISB cell 10 or stack of cells 10 is stopped.

Detection that the negative electrolyte requires acidification, and determining the end point of the acidification, can be done by using the ISB stable pH probe 80. The target pH can be a range, which will vary depending on use case of the ISB device and is valid for a pH from 2.5-4.5.

Fig. 8 shows regular ISB device operation combined with continuous acidification.

In this case, the acidification protocol comprises adjusting the valves 71-77 and pumps 21, 31, 41 in the piping such that acidic electrolyte flows from the AT 40, circumvents the AC 50, and is directed to the negative tank 30, while the flow of positive and negative electrolyte though the ISB cell 10 or stack of cells 10 continues. The flow rate of the acidic electrolyte is preferably set to balance out the pH increase in the negative electrolyte due to a hydrogen evolution reaction, HER.

During any of these acidification protocol embodiments as described with reference to Fig. 7 and 8, the acidification tank AT 40 is in a state where it contains only minimum levels of iron trichloride, in particular below 1% of the maximum value.

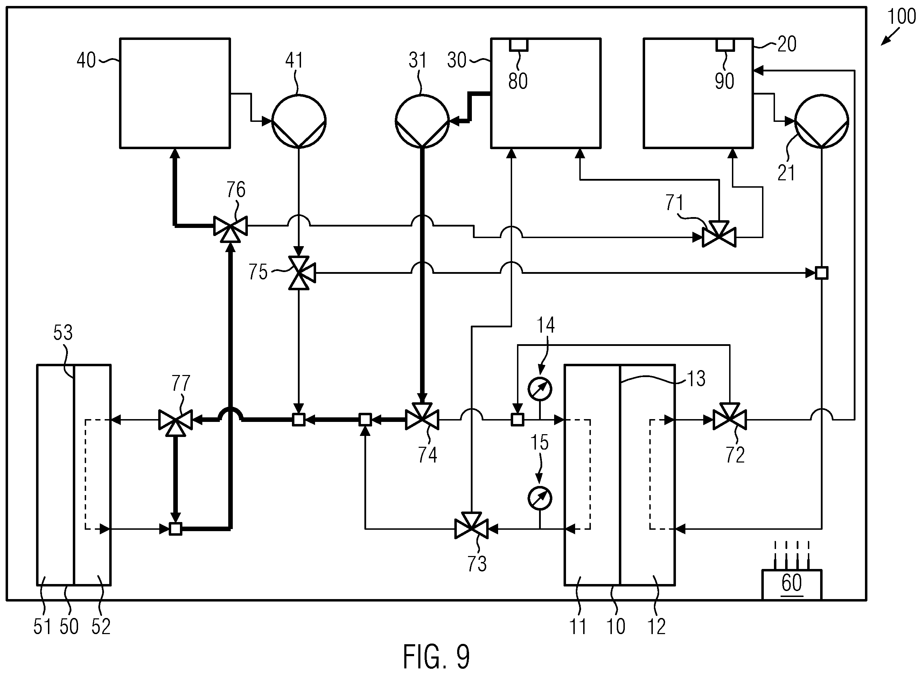

Fig. 9 shows transferring excess volume from the negative tank to the acidification tank.

At the end of the charge, discharge, or at other points, it is possible to return to the setpoint volume of the negative electrolyte by applying flow-scheme of Fig. 9.

The valves 71-77 and pumps 21, 31, 41 are set such that negative electrolyte is transferred from the negative tank 30 to the AT 40 until the setpoint volume of negative electrolyte in the negative tank 30 is reached.

It would also be possible to transfer the negative electrolyte from the negative tank 30 to the positive tank 20.

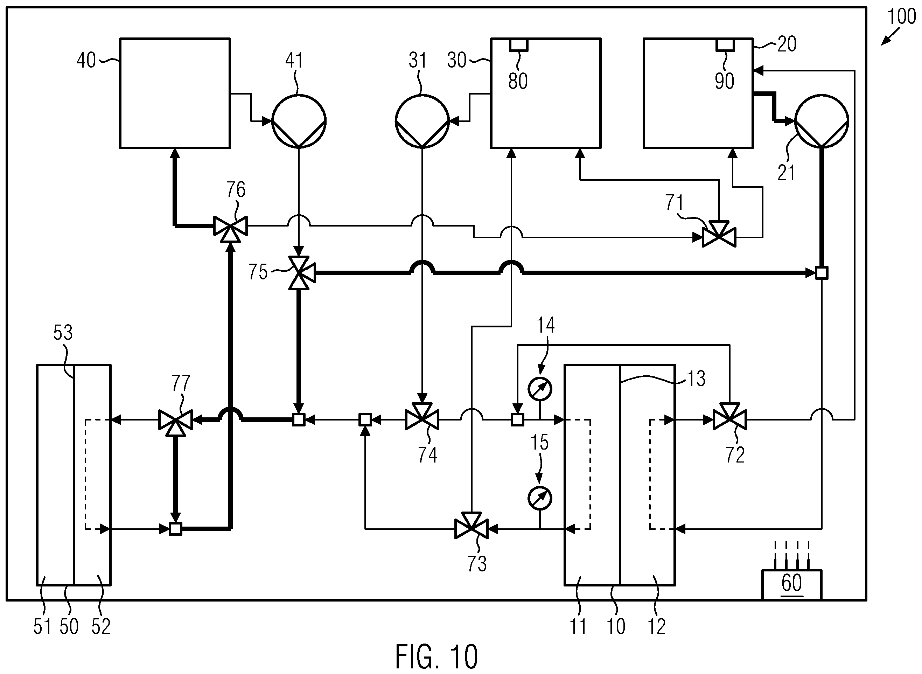

Fig. 10 shows a scheme to transfer liquid from positive to acidification tank in a "partial capacity restoring protocol".

During operation of the ISB device 100, Fe(III) accumulates in the positive electrolyte. In order to return it to Fe(II), a capacity restoring step can be taken before discharge (as a partial capacity restoring step) or after discharge (a full capacity restoring step). For partial capacity restoring, a volume of positive electrolyte can be transferred to the acidification tank AT 40, while in the charged state of the ISB device. The required volume can be determined by the Fe(III)% in the positive electrolyte, as determined by the Nernstian Fe(III) probe 90 described above or by the coulombic efficiency of previous cycles, other parameters, such a Fe(II) concentration in the negative tank 30, and a combination thereof. The volume can be transferred from the positive tank 90 to the acidification tank 40 in accordance with Fig. 10.

Specifically, the partial capacity restoring protocol comprising adjusting the valves 71-77 and pumps 21, 31, 41 in the piping such that a volume of positive electrolyte is transferred from the positive tank 20 to the AT 40, while the ISB device 100 in the charged state; wherein the required volume to be transferred is determined from at least one of (i) a concentration of Fe(III) in the positive electrolyte, as determined by the Fe(III)-probe 90 and (ii) a coulombic efficiency, CE, of previous charging/discharging cycles.

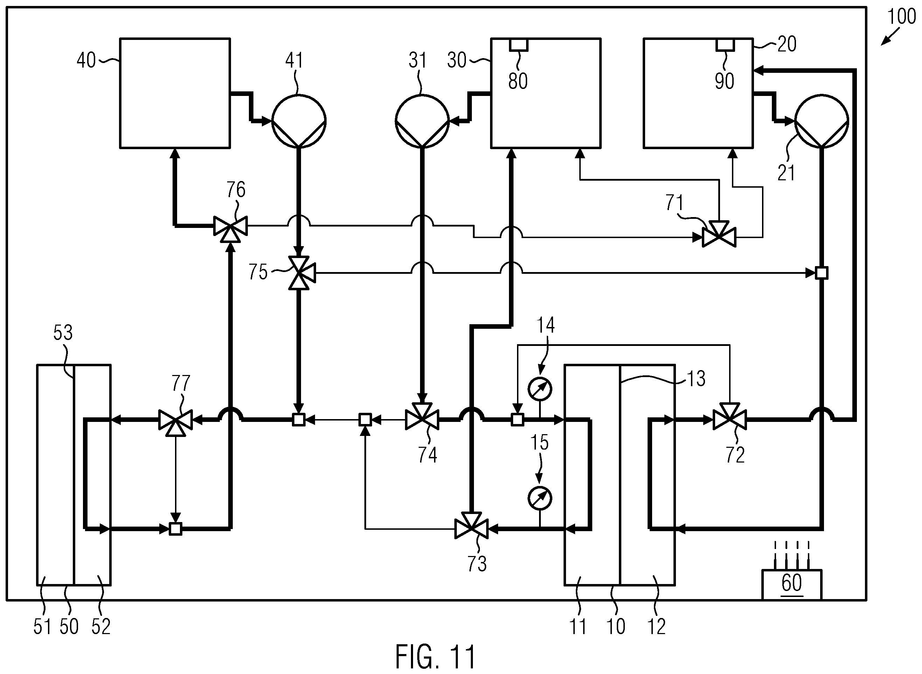

It is then possible to reduce the Fe(III) to Fe(II) using the acidification cell 50 as described with reference to Fig. 11 as follows.

Fig. 11 shows ISB device discharge while partial capacity restoring is taking place.

The partial capacity restoring protocol further comprises the step of adjusting the valves 71-77 and pumps 21, 31, 41 in the piping such that acidic electrolyte flows from the AT 40 to the positive half-cell 52 of the AC 50 and then back to the AT 40, thereby reducing Fe(III) to Fe(II) using the AC 40, in particular while the ISB device 100 is charging or discharging.

In this set-up, the ISB device 100 can charge or discharge, while the AC 50 is reducing excess Fe(III) and adding $H^+$ ions. $H_2$ is supplied to the anode from a hydrogen source. Specifically, hydrogen may be supplied to the negative half cell 51 of the AC 50 from hydrogen generated in the negative ISB half cell 11, or may come from an alternate hydrogen source, for example but not limited to, a hydrogen generator.

The end point of the partial capacity restoration can be detected by reaching threshold values of current or voltage on the AC 50, or a threshold detected by a Nernstian Fe(III) probe immersed in the acidic electrolyte.

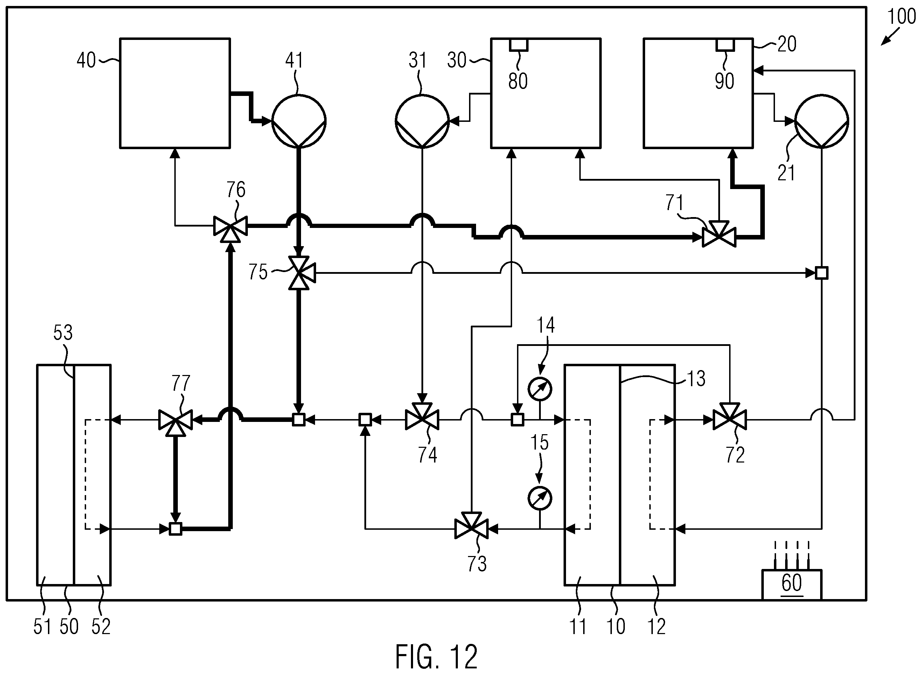

Once the capacity is restored, the excess volume can be returned from the acidification tank 40 to the positive tank 20 using the following scheme described with reference to Fig. 12.

Fig. 12 shows rebalancing the positive tank after partial capacity restore.

Excess volume is returned from the acidification tank 40 to the positive tank 20 by adjusting the valves 71-77 and pumps 21, 31, 41 such that acidic electrolyte flows only from the acidification tank 40 to the positive tank 20.

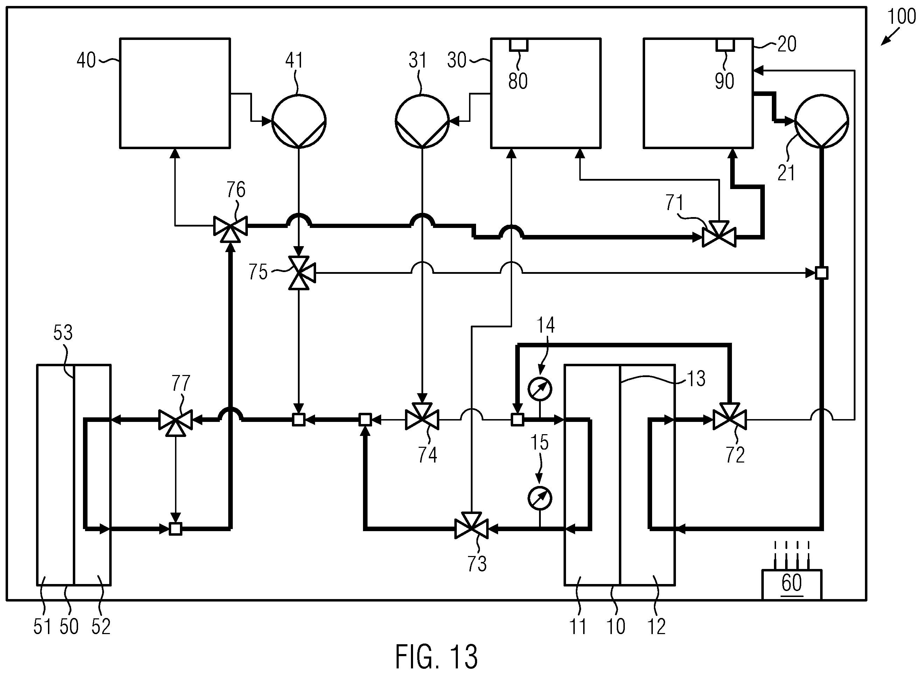

Fig. 13 shows full capacity restoration.

In some situations, it may be determined that a return to pristine ISB device conditions is required, which involves reducing all Fe(III) from the system. In such a case, the capacity restoration will take place in the discharged state of the battery. The electrolyte from the positive tank 20 will be pumped through the AC 50, and back to the positive tank 20.

According to this embodiment, the method of operating the ISB device comprises performing a full capacity restoring protocol in a discharged state of the ISB device; the full capacity restoring protocol comprising adjusting the valves 71-77 and pumps 21, 31, 41 in the piping such that positive electrolyte flows from the positive tank 20 to and through the positive ISB half-cell(s) 12, then to and through the negative ISB half-cell(s) 11, then to and through the positive half-cell 52 of the AC 50, and then back to the positive tank 20, in particular to reduce essentially all Fe(III) in the ISB device 100.

**EP 4 560 303 B1**

This may further comprise: determining an end point of the full capacity restoring protocol by reaching threshold values of current or voltage on the AC 50, or by reaching a Fe(III) threshold value detected by the Fe(III)-probe 90.

The embodiments described above can be summarized in an exemplary decision tree a follows. When starting the ISB device, it is charged for a set-point (SP) time Chg_SP. Then it is determined if the Fe(III) probe signal is less than a Fe(III)_SP value. If this is not the case, a partial capacity restore is performed, followed by discharge. If this is the case, then the ISB device is directly discharged. After discharge, it is determined if a full capacity restore is needed. If yes, the full capacity restore is performed. Otherwise, it is determined if criteria for triggering iron residue removal are met. If yes, the iron residue removal protocol is performed. Thereafter, or if the criteria for triggering iron residue removal are not met, it is determined if the criteria for triggering iron hydroxide removal are met. If yes, the iron hydroxide removal protocol is performed. Thereafter, or if the criteria for triggering iron hydroxide removal are not met, determining if the ISB stable pH probe signal is less than or equal pH_SP (e.g. 3.5). If this is not the case, perform acidification until ISB stable pH probe signal is equal to pH_SP. Thereafter, or if it is determined that the ISB stable pH probe signal is less than or equal pH_SP, return to charging the ISB device.

The charge step involves: 1. Flow electrolyte through ISB. 2. Demand current (e.g. in the range of 5-200 mA cm$^2$) for SP_time from anode to cathode (electron flow from cathode to anode).

The discharge step involves: 1. Flow electrolyte through ISB. 2. Demand current (e.g. of 10 mA cm$^2$) from cathode to anode (electrons flow from anode to cathode) until V_cutoff is reached.

The full capacity restore involves: 1. Arrange the valves so that positive electrolyte flows from positive tank to the positive side of the AC. 2. Supply hydrogen to the negative side of the AC. 3. Demand current from AC cathode to anode. When electrons cannot be drawn from the hydrogen, the capacity restoring is complete.

The partial capacity restore involves: 1. Arrange valves to allow flow from positive tank to AT. 2. Transfer a volume of positive electrolyte as determined by consulting probes and historical efficiency. 3 Change the valves to allow ISB discharge and AT electrolyte flow to AC. The ISB may be discharged from this point onwards. 4. Flow AT electrolyte to AC positive side, and hydrogen to AC negative side. 5. Demand current from AC cathode to anode. When electrons cannot be drawn from the hydrogen, the capacity restoring is complete.

The iron residue removal protocol involves: 1. A requirement for removal of iron residue can be triggered from number of cycles, high pressure in stack, or other reasons. Set valves so the flow is from positive tank --> positive ISB --> negative ISB --> positive tank. 2. Switch on the positive pump. 3. The residue removal is complete after a fixed amount of time, or other end criteria.

The iron hydroxide removal protocol involves: 1. A requirement for removal of iron hydroxide can be triggered from number of cycles, low voltaic efficiency, or other reasons. 1. Set valves so the flow is from AT --> positive ISB --> negative ISB --> positive AC --> AT. 2. Switch on the AT pump, and supply hydrogen to negative AC. 3. Demand current from AC cathode to anode When electrons cannot be drawn from the hydrogen, the cleaning is complete.

The acidification to pH=pH_SP involves: 1. Set valves to transfer AT electrolyte to negative tank. 2. Transfer AT electrolyte until pH_SP_low ≤ pH ≤ pH_SP_high or the negative tank is full. (A) If pH ≤ pH_SP_high: 1. Set valves to transfer electrolyte from negative to AT. 2. Transfer excess volume from negative tank to AT. (B) If negative tank is full or pH > pH_SP_high, 1. Set valves to transfer electrolyte from negative tank to AT. Transfer excess volume from negative tank to AT.

The embodiments are only exemplary and the full scope of the present invention is defined by the claims.

**Claims**

1. A pH-probe for determining a pH value of an electrolyte of an iron salt battery, ISB, device, the pH-probe comprising:

   a Fe(II)/Fe(III) reference electrode comprising a reference chamber containing a solution with predefined concentrations of Fe(II) and Fe(III); and
   a pH glass electrode;
   wherein the pH-probe is configured to measure a potential between the pH glass electrode and the Fe(II)/Fe(III) reference electrode, when the reference chamber and the pH glass electrode are immersed in the electrolyte of the ISB device.

2. A Fe(III)-probe for determining a Fe(III) concentration of an electrolyte of an iron salt battery, ISB, device, the Fe(III)-probe comprising:

   a Fe(II)/Fe(III) reference electrode comprising a reference chamber containing a solution with predefined concentrations of Fe(II) and Fe(III); and
   a graphite electrode;

wherein the Fe(III)-probe is configured to measure a potential between the graphite electrode and the Fe(II)/Fe(III) reference electrode, when the reference chamber and the graphite electrode are immersed in the electrolyte of the ISB device.

3. Iron salt battery, ISB, device, the ISB device comprising:

an ISB cell or a stack of ISB cells, wherein each ISB cell comprises a positive and a negative ISB half-cell;
a positive tank containing positive electrolyte;
a negative tank containing negative electrolyte;
an acidification tank, AT, containing acidic electrolyte; and
an acidification cell, AC, comprising a positive and a negative AC half-cell, the AC being configured for lowering pH of the acidic electrolyte;
wherein the ISB device further comprises at least one pH-probe according to claim 1 immersed in electrolyte of the ISB device and/or at least one Fe(III)-probe according to claim 2 immersed in electrolyte of the ISB device; and
processing circuitry configured to determine a pH-value from a signal of the at least one pH-probe and/or configured to determine a Fe(III) concentration value from a signal of the at least one Fe(III)-probe.

4. Method of operating the ISB device of claim 3, the method comprising:
selectively providing fluidic connections between the tanks and/or cells by adjusting valves and pumps in a piping of the ISB device using the processing circuitry to perform one or more operational modes of the ISB device.

5. Method of operating the ISB device according to claim 4, the method comprising:
adjusting the valves and pumps in the piping to perform one of the following operations:

charging the ISB device by flowing positive electrolyte from the positive tank to and through the positive half-cell(s) and back to the positive tank, and flowing negative electrolyte from the negative tank to an through the negative half-cell(s) of the ISB cell or stack of ISB cells and back to the negative tank, wherein electric power is provided to electrodes of the ISB cell or stack of ISB cells; or
discharging the ISB device by flowing positive electrolyte from the positive tank to and through the positive half-cell(s) and back to the positive tank, and flowing negative electrolyte from the negative tank to an through the negative half-cell(s) of the ISB cell or stack of ISB cells and back to the negative tank, wherein electric power is demanded from electrodes of the ISB cell or stack of ISB cells.

6. Method of operating the ISB device according to claim 4 or 5, comprising:

determining, in particular continuously tracking, a pH value in the negative electrolyte using the at least one pH-probe; and
if the pH value is determined to be above a predefined pH threshold value, performing an acidification protocol to acidify the negative electrolyte using the acidic electrolyte, either intermittently within a charging cycle or when the charging cycle is complete or continuously while charging, thereby reducing the pH value to be within a target pH range.

7. Method of operating an ISB device according to claim 6, wherein the acidification protocol comprises:

adjusting the valves and pumps in the piping such that acidic electrolyte flows from the AT, circumvents the AC, and is directed to the negative tank, while the flow of positive and negative electrolyte though the ISB cell or stack of cells is stopped; or
adjusting the valves and pumps in the piping such that acidic electrolyte flows from the AT, circumvents the AC, and is directed to the negative tank, while the flow of positive and negative electrolyte though the ISB cell or stack of cells continues, wherein the flow rate of the acidic electrolyte is preferably set to balance out the pH increase in the negative electrolyte due to a hydrogen evolution reaction, HER.

8. Method of operating an ISB device according to any one of claims 4 to 7, comprising:

performing an iron hydroxide removal protocol triggered by at least one of the following conditions: (i) a predefined number of charging and discharging cycles has been performed, (ii) a voltaic efficiency, VE, has dropped below a VE threshold, and (iii) a pressure drop on the outlet from one of the ISB cells is below a predefined value;
wherein the iron hydroxide removal protocol comprises adjusting the valves and pumps in the piping such that acidic electrolyte flows from the AT to and through the positive half-cell(s) of the ISB cell or stack of ISB cells, to and through the negative half-cell(s) of the ISB cell or stack of ISB cells, to and through the positive half-cell of the AC, and back to the AT.

9. Method of operating an ISB device according to any one of claims 4 to 8, comprising:

performing an iron residue removal protocol triggered by at least one of the following conditions: (i) after a predefined number of charging and discharging cycles has been performed, (ii) a pressure drop across the ISB cell or stack of ISB cells is outside a predefined pressure drop range, in particular at least one of a pressure drop across the positive half-cell(s) and the negative half-cell(s) of the ISB cell or stack of ISB cells, and (iii) a coulombic efficiency of the ISB device is below a predetermined value;
wherein the iron residue removal protocol comprises adjusting the valves and pumps in the piping such that positive electrolyte flows from the positive tank to and through the positive half-cell(s) of the ISB cell or stack of ISB cells, to and through the negative half-cell(s) of the ISB cell or stack of ISB cells, and back to the positive tank; or
wherein the iron residue removal protocol comprises adjusting the valves and pumps in the piping such that acidic electrolyte flows from the AC to and through the negative half cell(s) of the ISB cell or stack of ISB cells and back to the AC; or
wherein the iron residue removal protocol comprises adjusting the valves and pumps in the piping such that acidic electrolyte flows from the AC to and through the positive half-cell(s) of the ISB cell or stack of ISB cells, then to and through the negative half-cell(s) of the ISB cell or stack of ISB cells, and then back to the AT;
wherein the iron residue removal protocol is preferably started after the end of a discharge cycle.

10. Method of operating an ISB device according to any one of claims 4 to 9, further comprising the step of:
transferring excess volume of negative electrolyte from the negative tank to the acidification tank to return to a set-point volume of negative electrolyte in the negative tank.

11. Method of operating an ISB device according to any one of claims 4 to 10, further comprising:
performing a partial capacity restoring protocol comprising adjusting the valves and pumps in the piping such that a volume of positive electrolyte is transferred from the positive tank to the AT, while the ISB device in the charged state;
wherein the required volume to be transferred is determined from at least one of (i) a concentration of Fe(III) in the positive electrolyte, as determined by the Fe(III)-probe and (ii) a coulombic efficiency, CE, of previous charging/-discharging cycles.

12. Method of operating an ISB device according to claim 11, the partial capacity restoring protocol further comprising the step of:
adjusting the valves and pumps in the piping such that acidic electrolyte flows from the AT to the positive half-cell of the AC and back to the AT, thereby reducing Fe(III) to Fe(II) using the AC, in particular while the ISB device is charging or discharging.

13. Method of operating an ISB device according to claim 11 or 12, further comprising the step of:

determining an end point of the partial capacity restoring protocol by reaching threshold values of current or voltage on the AC or by reaching a Fe(III) threshold value detected by an Fe(III)-probe immersed in the acidic electrolyte; and
returning excess volume from the acidification tank to the positive tank by adjusting the valves and pumps such that acidic electrolyte flows only from the acidification tank to the positive tank.

14. Method of operating an ISB device according to any one of claims 4 to 13, further comprising:

performing a full capacity restoring protocol in a discharged state of the ISB device;
the full capacity restoring protocol comprising adjusting the valves and pumps in the piping such that positive electrolyte flows from the positive tank through the positive ISB half-cell(s), through the negative ISB half-cell(s), through the positive half-cell of the AC, and back to the positive tank, in particular to reduce essentially all Fe(III) in the ISB device.

15. Method of operating an ISB device according to claim 14, further comprising the step of:
determining an end point of the full capacity restoring protocol by reaching threshold values of current or voltage on the AC, or by reaching a Fe(III) threshold value detected by the Fe(III)-probe.

**Patentansprüche**

1. pH-Sonde zum Bestimmen eines pH-Wertes eines Elektrolyts einer Eisensalzbatterie-, ISB-, Vorrichtung, wobei die pH-Sonde Folgendes umfasst:

   eine Fe(II)/Fe(III)-Referenzelektrode, umfassend eine Referenzkammer, die eine Lösung mit vordefinierten Konzentrationen von Fe(II) und Fe(III) enthält; und
   eine pH-Glaselektrode;
   wobei die pH-Sonde dazu konfiguriert ist, ein Potential zwischen der pH-Glaselektrode und der Fe(II)/Fe(III)-Referenzelektrode zu messen, wenn die Referenzkammer und die pH-Glaselektrode in den Elektrolyt der ISB-Vorrichtung eingetaucht sind.

2. Fe(III)-Sonde zum Bestimmen einer Fe(III)-Konzentration eines Elektrolyts einer Eisensalzbatterie-, ISB-, Vorrichtung, wobei die Fe(III)-Sonde Folgendes umfasst:

   eine Fe(II)/Fe(III)-Referenzelektrode, umfassend eine Referenzkammer, die eine Lösung mit vordefinierten Konzentrationen von Fe(II) und Fe(III) enthält; und
   eine Graphitelektrode;
   wobei die Fe(III)-Sonde dazu konfiguriert ist, ein Potential zwischen der Graphitelektrode und der Fe(II)/Fe(III)-Referenzelektrode zu messen, wenn die Referenzkammer und die Graphitelektrode in den Elektrolyt der ISB-Vorrichtung eingetaucht sind.

3. Eisensalzbatterie-, ISB-, Vorrichtung, wobei die ISB-Vorrichtung Folgendes umfasst:

   eine ISB-Zelle oder einen ISB-Zellenstapel, wobei jede ISB-Zelle eine positive und eine negative ISB-Halbzelle umfasst;
   einen positiven Tank, der einen positiven Elektrolyt enthält;
   einen negativen Tank, der einen negativen Elektrolyt enthält;
   einen Säuerungstank, AT, der einen sauren Elektrolyt enthält; und
   eine Säuerungszelle, AC, die eine positive und eine negative AC-Halbzelle umfasst, wobei die AC dazu konfiguriert ist, den pH-Wert des sauren Elektrolyts zu senken;
   wobei die ISB-Vorrichtung des Weiteren mindestens eine in den Elektrolyt der ISB-Vorrichtung eingetauchte pH-Sonde gemäß Anspruch 1 und/oder mindestens eine in den Elektrolyt der ISB-Vorrichtung eingetauchte Fe(III)-Sonde gemäß Anspruch 2 umfasst; und
   eine Verarbeitungsschaltung, die dazu konfiguriert ist, einen pH-Wert aus einem Signal der mindestens einen pH-Sonde zu bestimmen und/oder dazu konfiguriert ist, einen Fe(III)-Konzentrationswert aus einem Signal der mindestens einen Fe(III)-Sonde zu bestimmen.

4. Verfahren zum Betreiben der ISB-Vorrichtung nach Anspruch 3, wobei das Verfahren Folgendes umfasst:
   selektives Bereitstellen von Fluidverbindungen zwischen den Tanks und/oder Zellen durch Einstellen von Ventilen und Pumpen in einer Rohrleitung der ISB-Vorrichtung unter Verwendung der Verarbeitungsschaltung, um einen oder mehrere Betriebsmodi der ISB-Vorrichtung durchzuführen.

5. Verfahren zum Betreiben der ISB-Vorrichtung nach Anspruch 4, wobei das Verfahren Folgendes umfasst:
   Einstellen der Ventile und Pumpen in der Rohrleitung, um einen der folgenden Vorgänge auszuführen:

   Laden der ISB-Vorrichtung durch Fließenlassen von positivem Elektrolyt aus dem positiven Tank zu und durch die positive(n) Halbzelle(n) und zurück zu dem positiven Tank und Fließenlassen von negativem Elektrolyt aus dem negativen Tank zu und durch die negative(n) Halbzelle(n) der ISB-Zelle oder des ISB-Zellenstapels und zurück zu dem negativen Tank, wobei den Elektroden der ISB-Zelle oder des ISB-Zellenstapels elektrische Leistung bereitgestellt wird; oder
   Entladen der ISB-Vorrichtung durch Fließenlassen von positivem Elektrolyt aus dem positiven Tank zu und durch die positive(n) Halbzelle(n) und zurück zu dem positiven Tank und Fließenlassen von negativem Elektrolyt aus dem negativen Tank zu und durch die negative(n) Halbzelle(n) der ISB-Zelle oder des ISB-Zellenstapels und zurück zu dem negativen Tank, wobei elektrische Leistung von Elektroden der ISB-Zelle oder des ISB-Zellenstapels angefordert wird.

6. Verfahren zum Betreiben der ISB-Vorrichtung nach Anspruch 4 oder 5, umfassend:

Bestimmen, insbesondere kontinuierliches Verfolgen, eines pH-Wertes in dem negativen Elektrolyt unter Verwendung der mindestens einen pH-Sonde; und

wenn bestimmt wird, dass der pH-Wert über einem vordefinierten pH-Schwellenwert liegt, Durchführen eines Säuerungsprotokolls, um den negativen Elektrolyt unter Verwendung des sauren Elektrolyts zu säuern, entweder intermittierend innerhalb eines Ladezyklus oder wenn der Ladezyklus abgeschlossen ist oder kontinuierlich während des Ladens, wodurch der pH-Wert so gesenkt wird, dass er innerhalb eines Ziel-pH-Bereichs liegt.

7. Verfahren zum Betreiben einer ISB-Vorrichtung nach Anspruch 6, wobei das Säuerungsprotokoll Folgendes umfasst:

Einstellen der Ventile und Pumpen in der Rohrleitung, so dass saurer Elektrolyt aus dem AT fließt, den AC umgeht und zu dem negativen Tank geleitet wird, während der Fluss aus positivem und negativem Elektrolyt durch die ISB-Zelle oder den Zellenstapel gestoppt wird; oder

Einstellen der Ventile und Pumpen in der Rohrleitung, so dass saurer Elektrolyt aus dem AT fließt, den AC umgeht und zu dem negativen Tank geleitet wird, während der Fluss aus positivem und negativem Elektrolyt durch die ISB-Zelle oder den Zellenstapel fortgesetzt wird, wobei die Flussrate des sauren Elektrolyts vorzugsweise so eingestellt ist, dass sie den pH-Anstieg in dem negativen Elektrolyt aufgrund einer Wasserstoffentwicklungsreaktion, HER, ausgleicht.

8. Verfahren zum Betreiben einer ISB-Vorrichtung nach einem der Ansprüche 4 bis 7, umfassend:

Durchführen eines Eisenhydroxid-Entfernungsprotokolls, das durch mindestens eine der folgenden Bedingungen ausgelöst wird: (i) eine vordefinierte Anzahl von Lade- und Entladezyklen wurde durchgeführt, (ii) ein voltaischer Wirkungsgrad, VE, ist unter einen VE-Schwellenwert gefallen und (iii) ein Druckabfall am Auslass von einer der ISB-Zellen liegt unter einem vordefinierten Wert;

wobei das Eisenhydroxid-Entfernungsprotokoll das Einstellen der Ventile und Pumpen in der Rohrleitung umfasst, so dass saurer Elektrolyt aus dem AT zu und durch die positive(n) Halbzelle(n) der ISB-Zelle oder des ISB-Zellenstapels, zu und durch die negative(n) Halbzelle(n) der ISB-Zelle oder des ISB-Zellenstapels, zu und durch die positive Halbzelle des AC und zurück zu dem AT fließt.

9. Verfahren zum Betreiben einer ISB-Vorrichtung nach einem der Ansprüche 4 bis 8, umfassend:

Durchführen eines Eisenrückstände-Entfernungsprotokolls, das durch mindestens eine der folgenden Bedingungen ausgelöst wird: (i) nachdem eine vorgegebene Anzahl von Lade- und Entladezyklen durchgeführt wurde, (ii) ein Druckabfall über die ISB-Zelle oder den ISB-Zellenstapel liegt außerhalb eines vorgegebenen Druckabfallbereichs, insbesondere mindestens ein Druckabfall über die positive(n) Halbzelle(n) und die negative(n) Halbzelle(n) der ISB-Zelle oder des ISB-Zellenstapels, und (iii) ein coulombscher Wirkungsgrad der ISB-Vorrichtung liegt unter einem vorgegebenen Wert;

wobei das Eisenrückstände-Entfernungsprotokoll das Einstellen der Ventile und Pumpen in der Rohrleitung umfasst, so dass positiver Elektrolyt aus dem positiven Tank und durch die positive(n) Halbzelle(n) der ISB-Zelle oder des ISB-Zellenstapels, zu und durch die negative(n) Halbzelle(n) der ISB-Zelle oder des ISB-Zellenstapels, und zurück zu dem positiven Tank fließt; oder

wobei das Eisenrückstände-Entfernungsprotokoll das Einstellen der Ventile und Pumpen in der Rohrleitung umfasst, so dass saurer Elektrolyt aus dem AC zu und durch die negative(n) Halbzelle(n) der ISB-Zelle oder des ISB-Zellenstapels und zurück zu dem AC fließt; oder

wobei das Eisenrückstände-Entfernungsprotokoll das Einstellen der Ventile und Pumpen in der Rohrleitung umfasst, so dass saurer Elektrolyt aus dem AC und durch die positive(n) Halbzelle(n) der ISB-Zelle oder des ISB-Zellenstapels, dann zu und durch die negative(n) Halbzelle(n) der ISB-Zelle oder des ISB-Zellenstapels, und anschließend zurück zu dem AT fließt;

wobei das Eisenrückstände-Entfernungsprotokoll vorzugsweise nach dem Ende eines Entladezyklus gestartet wird.

10. Verfahren zum Betreiben einer ISB-Vorrichtung nach einem der Ansprüche 4 bis 9, des Weiteren umfassend folgenden Schritt:
Übertragen des überschüssigen Volumens an negativem Elektrolyt aus dem negativen Tank in den Säuerungstank, um zu einem Sollvolumen an negativem Elektrolyt in dem negativen Tank zurückzukehren.

11. Verfahren zum Betreiben einer ISB-Vorrichtung nach einem der Ansprüche 4 bis 10, des Weiteren umfassend:
Durchführen eines Teilkapazitäts-Wiederherstellungsprotokolls, umfassend das Einstellen der Ventile und Pumpen in der Rohrleitung, so dass ein Volumen an positivem Elektrolyt aus dem positiven Tank zu dem AT übertragen wird, während sich die ISB-Vorrichtung in dem geladenen Zustand befindet; wobei das erforderliche Volumen, das übertragen werden muss, aus mindestens einem aus (i) einer Konzentration von Fe(III) in dem positiven Elektrolyt, wie sie durch die Fe(III)-Sonde bestimmt wird, und (ii) einem coulombschen Wirkungsgrad, CE, von vorherigen Lade-/Entladezyklen bestimmt wird.

12. Verfahren zum Betreiben einer ISB-Vorrichtung nach Anspruch 11, wobei das Teilkapazitäts-Wiederherstellungsprotokoll des Weiteren folgenden Schritt umfasst:
Einstellen der Ventile und Pumpen in der Rohrleitung, so dass saurer Elektrolyt aus dem AT zu der positiven Halbzelle des AC und zurück zu dem AT fließt, wodurch Fe(III) unter Verwendung des AC zu Fe(II) reduziert wird, insbesondere während die ISB-Vorrichtung geladen oder entladen wird.

13. Verfahren zum Betreiben einer ISB-Vorrichtung nach Anspruch 11 oder 12, umfassend folgenden Schritt:

Bestimmen eines Endpunktes des Teilkapazitäts-Wiederherstellungsprotokolls durch Erreichen von Schwellenwerten von Strom oder Spannung an dem AC oder durch Erreichen eines Fe(III)-Schwellenwertes, der von einer in den sauren Elektrolyt eingetauchten Fe(III)-Sonde ermittelt wird; und
Rückführen des überschüssigen Volumens aus dem Säuerungstank in den positiven Tank, durch Einstellen der Ventile und Pumpen so, dass saurer Elektrolyt nur aus dem Säuerungstank in den positiven Tank fließt.

14. Verfahren zum Betreiben einer ISB-Vorrichtung nach einem der Ansprüche 4 bis 13, des Weiteren umfassend:

Durchführen eines Protokolls zur Wiederherstellung der vollen Kapazität in einem entladenen Zustand der ISB-Vorrichtung;
wobei das Protokoll zur Wiederherstellung der vollen Kapazität das Einstellen der Ventile und Pumpen in der Rohrleitung umfasst, so dass positiver Elektrolyt aus dem positiven Tank durch die positive(n) ISB-Halbzelle(n), durch die negative(n) ISB-Halbzelle(n), durch die positive Halbzelle des AC und zurück zu dem positiven Tank fließt, insbesondere um im Wesentlichen das gesamte Fe(III) in der ISB-Vorrichtung zu reduzieren.

15. Verfahren zum Betreiben einer ISB-Vorrichtung nach Anspruch 14, des Weiteren umfassend folgenden Schritt:
Bestimmen eines Endpunktes des Protokolls zur Wiederherstellung der vollen Kapazität durch Erreichen von Schwellenwerten von Strom oder Spannung an dem AC, oder durch Erreichen eines Fe(III)-Schwellenwertes, der von der Fe(III)-Sonde ermittelt wird.

**Revendications**

1. Sonde de pH destinée à déterminer une valeur de pH d'un électrolyte d'un dispositif de batterie au sel de fer, ISB, la sonde de pH comprenant :

une électrode de référence Fe(II)/Fe(III) comprenant une chambre de référence contenant une solution ayant des concentrations prédéfinies de Fe(II) et de Fe(III) ; et
une électrode de verre de mesure de pH ;
dans laquelle la sonde de pH est configurée pour mesurer un potentiel entre l'électrode de verre de mesure de pH et l'électrode de référence Fe(II)/Fe(III), lorsque la chambre de référence et l'électrode de verre de mesure de pH sont immergées dans l'électrolyte du dispositif ISB.

2. Sonde de Fe(III) destinée à déterminer une concentration de Fe(III) d'un électrolyte d'un dispositif de batterie au sel de fer, ISB, la sonde de Fe(III) comprenant :

une électrode de référence Fe(II)/Fe(III) comprenant une chambre de référence contenant une solution ayant des concentrations prédéfinies de Fe(II) et de Fe(III) ; et
une électrode en graphite ;
dans laquelle la sonde de Fe(III) est configurée pour mesurer un potentiel entre l'électrode en graphite et l'électrode de référence Fe(II)/Fe(III), lorsque la chambre de référence et l'électrode en graphite sont immergées dans l'électrolyte du dispositif ISB.

3. Dispositif de batterie au sel de fer, ISB, le dispositif ISB comprenant :

une cellule ISB ou un empilement de cellules ISB, dans lequel chaque cellule ISB comprend des demi-cellules ISB positive et négative ;
un réservoir positif contenant un électrolyte positif ;
un réservoir négatif contenant un électrolyte négatif ;
un réservoir d'acidification, AT, contenant un électrolyte acide ; et
une cellule d'acidification, AC, comprenant des demi-cellules AC positive et négative, l'AC étant configurée pour abaisser le pH de l'électrolyte acide ;
dans lequel le dispositif ISB comprend en outre au moins une sonde de pH selon la revendication 1 immergée dans l'électrolyte du dispositif ISB et/ou au moins une sonde de Fe(III) selon la revendication 2 immergée dans l'électrolyte du dispositif ISB ; et
un ensemble de circuits de traitement configuré pour déterminer une valeur de pH à partir d'un signal de l'au moins une sonde de pH et/ou configuré pour déterminer une valeur de concentration de Fe(III) à partir d'un signal de l'au moins une sonde de Fe(III).

**4.** Procédé de fonctionnement du dispositif ISB de la revendication 3, le procédé comprenant :
l'établissement sélectif de connexions fluidiques entre les réservoirs et/ou les cellules par ajustement de vannes et de pompes dans une tuyauterie du dispositif ISB en utilisant l'ensemble de circuits de traitement pour réaliser un ou plusieurs modes de fonctionnement du dispositif ISB.

**5.** Procédé de fonctionnement du dispositif ISB selon la revendication 4, le procédé comprenant :
l'ajustement des vannes et des pompes dans la tuyauterie pour réaliser l'une des opérations suivantes :

la charge du dispositif ISB par écoulement de l'électrolyte positif depuis le réservoir positif vers et à travers la(les) demi-cellule(s) positive(s), puis de retour vers le réservoir positif, et par écoulement de l'électrolyte négatif depuis le réservoir négatif vers et à travers la(les) demi-cellule(s) négative(s) de la cellule ISB ou de l'empilement de cellules ISB, puis de retour vers le réservoir négatif, dans lequel de l'énergie électrique est fournie aux électrodes de la cellule ISB ou de l'empilement de cellules ISB ; ou
la décharge du dispositif ISB, par écoulement de l'électrolyte positif depuis le réservoir positif vers et à travers la(les) demi-cellule(s) positive(s), puis de retour vers le réservoir positif, et par écoulement de l'électrolyte négatif depuis le réservoir négatif vers et à travers la(les) demi-cellule(s) négative(s) de la cellule ISB ou de l'empilement de cellules ISB, puis de retour vers le réservoir négatif, dans lequel de l'énergie électrique est prélevée sur les électrodes de la cellule ISB ou de l'empilement de cellules ISB.

**6.** Procédé de fonctionnement du dispositif ISB selon la revendication 4 ou 5, comprenant :

la détermination, en particulier le suivi en continu, d'une valeur de pH dans l'électrolyte négatif en utilisant au moins une sonde de pH ; et
si la valeur de pH est déterminée comme étant supérieure à une valeur seuil de pH prédéfinie, la réalisation d'un protocole d'acidification pour acidifier l'électrolyte négatif en utilisant l'électrolyte acide, soit de manière intermittente au cours d'un cycle de charge, soit lorsque le cycle de charge est terminé, soit de manière continue pendant la charge, réduisant ainsi la valeur de pH pour qu'elle se situe dans une plage de pH cible.

**7.** Procédé de fonctionnement d'un dispositif ISB selon la revendication 6, dans lequel le protocole d'acidification comprend :

l'ajustement des vannes et des pompes dans la tuyauterie de sorte que l'électrolyte acide s'écoule depuis l'AT, contourne l'AC et soit dirigé vers le réservoir de l'électrolyte négatif, tandis que l'écoulement des électrolytes positif et négatif à travers la cellule ISB ou l'empilement de cellules est arrêté ; ou
l'ajustement des vannes et des pompes dans la tuyauterie de sorte que l'électrolyte acide s'écoule depuis l'AT, contourne l'AC et soit dirigé vers le réservoir négatif, tandis que l'écoulement des électrolytes positif et négatif à travers la cellule ISB ou l'empilement de cellules se poursuit, dans lequel le débit de l'électrolyte acide est de préférence réglé pour compenser l'augmentation de pH dans l'électrolyte négatif due à une réaction de dégagement d'hydrogène, HER.

**8.** Procédé de fonctionnement d'un dispositif ISB selon l'une quelconque des revendications 4 à 7, comprenant :

la réalisation d'un protocole d'élimination d'hydroxyde de fer déclenché par au moins l'une des conditions suivantes : (i) un nombre prédéfini de cycles de charge et de décharge a été réalisé, (ii) un rendement voltaïque, VE, est tombé en dessous d'un seuil de VE, et (iii) une chute de pression à la sortie de l'une des cellules ISB est inférieure à une valeur prédéfinie ;

dans lequel le protocole d'élimination d'hydroxyde de fer comprend l'ajustement des vannes et des pompes dans la tuyauterie de sorte que l'électrolyte acide s'écoule depuis l'AT vers et à travers la(les) demi-cellule(s) positive(s) de la cellule ISB ou de l'empilement de cellules ISB, vers et à travers la(les) demi-cellule(s) négative(s) de la cellule ISB ou de l'empilement de cellules ISB, vers et à travers la demi-cellule positive de l'AC, puis de retour vers l'AT.

9. Procédé de fonctionnement d'un dispositif ISB selon l'une quelconque des revendications 4 à 8, comprenant :

la réalisation d'un protocole d'élimination de résidus de fer déclenché par au moins l'une des conditions suivantes : (i) après qu'un nombre prédéfini de cycles de charge et de décharge a été réalisé, (ii) une chute de pression à travers la cellule ISB ou l'empilement de cellules ISB est en dehors d'une plage de chute de pression prédéfinie, en particulier au moins l'une parmi une chute de pression à travers la(les) demi-cellule(s) positive(s) et la(les) demi-cellule(s) négative(s) de la cellule ISB ou de l'empilement de cellules ISB, et (iii) un rendement coulombique du dispositif ISB est inférieur à une valeur prédéterminée ;

dans lequel le protocole d'élimination de résidus de fer comprend l'ajustement des vannes et des pompes dans la tuyauterie de sorte que l'électrolyte positif s'écoule depuis le réservoir positif vers et à travers la(les) demi-cellule(s) positive(s) de la cellule ISB ou de l'empilement de cellules ISB, vers et à travers la(les) demi-cellule(s) négative(s) de la cellule ISB ou de l'empilement de cellules ISB, puis de retour vers le réservoir positif ; ou

dans lequel le protocole d'élimination de résidus de fer comprend l'ajustement des vannes et des pompes dans la tuyauterie de sorte que l'électrolyte acide s'écoule depuis l'AC vers et à travers la(les) demi-cellule(s) négative(s) de la cellule ISB ou de l'empilement de cellules ISB, puis de retour vers l'AC ; ou

dans lequel le protocole d'élimination de résidus de fer comprend l'ajustement des vannes et des pompes dans la tuyauterie de sorte que l'électrolyte acide s'écoule depuis l'AC vers et à travers la(les) demi-cellule(s) positive(s) de la cellule ISB ou de l'empilement de cellules ISB, puis vers et à travers la(les) demi-cellule(s) négative(s) de la cellule ISB ou de l'empilement de cellules ISB, puis de retour vers l'AT ;

dans lequel le protocole d'élimination de résidus de fer est de préférence démarré après la fin d'un cycle de décharge.

10. Procédé de fonctionnement d'un dispositif ISB selon l'une quelconque des revendications 4 à 9, comprenant en outre l'étape de :
transfert d'un volume excédentaire d'électrolyte négatif depuis le réservoir négatif vers le réservoir d'acidification pour ramener le volume d'électrolyte négatif dans le réservoir négatif à un volume de consigne.

11. Procédé de fonctionnement d'un dispositif ISB selon l'une quelconque des revendications 4 à 10, comprenant en outre :
la réalisation d'un protocole de restauration partielle de capacité comprenant l'ajustement des vannes et des pompes dans la tuyauterie de sorte qu'un volume d'électrolyte positif soit transféré du réservoir positif vers l'AT, tandis que le dispositif ISB est à l'état chargé ; dans lequel le volume nécessaire à transférer est déterminé à partir d'au moins l'une parmi (i) une concentration de Fe(III) dans l'électrolyte positif, telle que déterminée par la sonde de Fe(III), et (ii) un rendement coulombique, CE, des cycles de charge/décharge précédents.

12. Procédé de fonctionnement d'un dispositif ISB selon la revendication 11, le protocole de restauration partielle de capacité comprenant en outre l'étape de :
ajustement des vannes et des pompes dans la tuyauterie de sorte que l'électrolyte acide s'écoule depuis l'AT vers la demi-cellule positive de l'AC, puis de retour vers l'AT, réduisant ainsi le Fe(III) en Fe(II) en utilisant l'AC, en particulier pendant que le dispositif ISB est en charge ou en décharge.

13. Procédé de fonctionnement d'un dispositif ISB selon la revendication 11 ou 12, comprenant en outre l'étape de :

détermination d'un point final du protocole de restauration partielle de capacité en atteignant des valeurs seuils de courant ou de tension sur l'AC, ou en atteignant une valeur seuil de Fe(III) détectée par une sonde de Fe(III) immergée dans l'électrolyte acide ; et

retour du volume excédentaire du réservoir d'acidification vers le réservoir positif en ajustant les vannes et les pompes de sorte que l'électrolyte acide s'écoule uniquement du réservoir d'acidification vers le réservoir positif.

14. Procédé de fonctionnement d'un dispositif ISB selon l'une quelconque des revendications 4 à 13, comprenant en outre :

la réalisation d'un protocole de restauration complète de capacité lorsque le dispositif ISB est à l'état déchargé ;
le protocole de restauration complète de capacité comprenant l'ajustement des vannes et des pompes dans la tuyauterie de sorte que l'électrolyte positif s'écoule depuis le réservoir positif, à travers la (les) demi-cellule(s) ISB positive(s), à travers la(les) demi-cellule(s) ISB négative(s), à travers la demi-cellule positive de l'AC, puis de retour vers le réservoir positif, notamment afin de réduire essentiellement la totalité du Fe(III) dans le dispositif ISB.

15. Procédé de fonctionnement d'un dispositif ISB selon la revendication 14, comprenant en outre l'étape de : détermination d'un point final du protocole de restauration complète de capacité en atteignant des valeurs seuils de courant ou de tension sur l'AC, ou en atteignant une valeur seuil de Fe(III) détectée par la sonde de Fe(III).

FIG. 1

FIG. 2

EP 4 560 303 B1

FIG. 3

FIG. 4

EP 4 560 303 B1

FIG. 5

EP 4 560 303 B1

FIG. 6

EP 4 560 303 B1

FIG. 7

FIG. 8

FIG. 9

FIG. 10

FIG. 11

EP 4 560 303 B1

FIG. 12

FIG. 13

**REFERENCES CITED IN THE DESCRIPTION**

**Patent documents cited in the description**

- WO 2018201070 A1